# EUROPÄISCHE PATENTANMELDUNG

(11) **EP 3 968 152 A1**
(43) Veröffentlichungstag der Anmeldung: **16.03.2022**
(21) Anmeldenummer: 20196119.0
(22) Anmeldetag: 15.09.2020
(51) Int. Cl.: G06F 9/445, G05B 19/042, G05B 19/05

(54) **VERFAHREN ZUM ÜBERTRAGEN EINER SOFTWARE-APPLIKATION VON EINER ERSTEN ZU EINER ZWEITEN DATENVERARBEITUNGSEINRICHTUNG**

(71) Anmelder: Siemens Aktiengesellschaft, 80333 München (DE)
(72) Erfinder: Götz, Jan, 91054 Buckenhof (DE); Reichmann, Jürgen, 81825 München (DE)

(57) **Zusammenfassung**

Die vorliegende Erfindung betrifft ein Verfahren zum Übertragen einer Software-Applikation (500, 550) von einer ersten (200) zu einer zweiten Datenverarbeitungseinrichtung (300), umfassend die nachfolgenden Schritte:
a.) Ablauf einer in der ersten Datenverarbeitungseinrichtung (200) implementierten ersten Instanz der Software-Applikation (500, 550), wobei im Rahmen des Ablaufs der ersten Instanz der Software-Applikation (500, 550) innerhalb der ersten Datenverarbeitungseinrichtung (200)
- eine Datenkommunikation der ersten Instanz der Software-Applikation (500, 550) mit einer weiteren Software-Applikation (400) und/oder einer Vorrichtung (700) erfolgt, und
- Zustandsdaten (510, 560) bezüglich eines internen Zustands der ersten Datenverarbeitungseinrichtung (200) und/oder bezüglich eines internen Ablaufs der ersten Instanz der Software-Applikation (500, 550) in einer ersten Speichereinrichtung (210) gespeichert werden;

b.) Übertragen von zu einem ersten Zeitpunkt in der ersten Datenverarbeitungseinrichtung (200) vorliegenden Start-Zustandsdaten (510, 560) zu einer mit der zweiten Datenverarbeitungseinrichtung (300) kommunikativ gekoppelten zweiten Speichereinrichtung (310);
c.) Starten einer in der zweiten Datenverarbeitungseinrichtung (300) implementierten zweiten Instanz der Software-Applikation (502, 552) zu einem zweiten Zeitpunkt unter Verwendung der Start-Zustandsdaten (510, 560),
wobei die Ausführung der zweiten Instanz der Software-Applikation (502, 552) in der zweiten Datenverarbeitungseinrichtung (300) dann derart erfolgt, dass zu einem dem zweiten Zeitpunkt nachfolgenden dritten Zeitpunkt die erste Instanz der Software-Applikation (500, 550) in der ersten Datenverarbeitungseinrichtung (200) und die zweite Instanz der Software-Applikation (502, 552) in der zweiten Datenverarbeitungseinrichtung (300) synchron ablaufen;
d.) Übergabe Datenkommunikation mit der weiteren Software-Applikation (400) oder Vorrichtung (700) von der in der ersten Datenverarbeitungseinrichtung (200) implementierten ersten Instanz der Software-Applikation (500, 550) an die in der zweiten Datenverarbeitungseinrichtung (300) implementierten zweite Instanz der Software-Applikation (502, 552).

## Beschreibung

Die vorliegende Erfindung betrifft ein Verfahren zum Übertragen einer Software-Applikation von einer ersten zu einer zweiten Datenverarbeitungseinrichtung,
wobei beim Ablauf einer in der ersten Datenverarbeitungseinrichtung implementierten ersten Instanz der Software-Applikation eine Datenkommunikation der ersten Instanz der Software-Applikation mit einer weiteren Software-Applikation und/oder einer Vorrichtung erfolgt.

Derartige Verfahren sind aus dem Stand der Technik bekannt. So offenbart z.B. die Offenlegungsschrift EP 3 611 579 A1 eine Echtzeit-Automatisierungseinrichtung mit einem Echtzeit-Datenbus, über welchen verschiedene in der Echtzeit-Automatisierungseinrichtung installierte Applikationen gekoppelt sind. Die Kommunikation von Daten über den Echtzeit-Datenbus erfolgt über sogenannten Bus-Variablen, welchen diese Daten jeweils zugeordnet sein. Dabei ist in einer Bus-Datenbank des Echtzeit-Datenbusses hinterlegt, welche der Applikationen Werte zu welchen der Bus-Variablen liefert. Über eine Synchronisierung der jeweiligen Bus-Datenbanken zu zwei in verschiedenen Echtzeit-Controllern vorliegenden Echtzeit-Datenbussen offenbart die EP 3 611 579 A1 weiterhin die Möglichkeit einer Verschiebung einer Applikation von einem zum anderen Echtzeit-Controller.

Es ist ein Nachteil des Standes der Technik, dass die Echtzeit-Synchronisation verschiedener Echtzeit-Controller, insbesondere der zugehörigen Echtzeit-Datenbanken, kompliziert und fehlerträchtig sein kann - insbesondere bei anspruchsvolleren Echtzeit-Anforderungen. Dies macht z.B. die Verschiebung einer Software-Applikation zwischen solchen Echtzeit-Controllern kompliziert und fehlerträchtig.

Daher ist es eine Aufgabe der vorliegenden Erfindung, ein verbessertes Verfahren und/oder eine verbesserte Vorrichtung zum Verschieben einer Software-Applikation zwischen verschiedenen Datenverarbeitungsvorrichtungen zur Verfügung zu stellen.

Diese Aufgabe wird gelöst durch ein Verfahren mit den Merkmalen des Patentanspruch 1.

Ein derartiges Verfahren ist zum Übertragen einer Software-Applikation von einer ersten zu einer zweiten Datenverarbeitungseinrichtung ausgebildet und eingerichtet und umfasst die nachfolgenden Schritte:
a.) Ablauf einer in der ersten Datenverarbeitungseinrichtung implementierten ersten Instanz der Software-Applikation, wobei im Rahmen des Ablaufs der ersten Instanz der Software-Applikation innerhalb der ersten Datenverarbeitungseinrichtung
   - eine Datenkommunikation der ersten Instanz der Software-Applikation mit einer weiteren Software-Applikation und/oder einer Vorrichtung erfolgt, und
   - Zustandsdaten bezüglich eines internen Zustands der ersten Datenverarbeitungseinrichtung und/oder bezüglich eines internen Ablaufs der ersten Instanz der Software-Applikation in einer ersten Speichereinrichtung gespeichert werden;
b.) Übertragen von zu einem ersten Zeitpunkt in der ersten Datenverarbeitungseinrichtung vorliegenden Start-Zustandsdaten zu einer mit der zweiten Datenverarbeitungseinrichtung kommunikativ gekoppelten zweiten Speichereinrichtung;
c.) Starten einer in der zweiten Datenverarbeitungseinrichtung implementierten zweiten Instanz der Software-Applikation zu einem zweiten Zeitpunkt unter Verwendung der Start-Zustandsdaten,
   wobei die Ausführung der zweiten Instanz der Software-Applikation in der zweiten Datenverarbeitungseinrichtung dann derart erfolgt, dass zu einem dem zweiten Zeitpunkt nachfolgenden dritten Zeitpunkt die erste Instanz der Software-Applikation in der ersten Datenverarbeitungseinrichtung und die zweite Instanz der Software-Applikation in der zweiten Datenverarbeitungseinrichtung synchron ablaufen;
d.) Übergabe Datenkommunikation mit der weiteren Software-Applikation oder Vorrichtung von der in der ersten Datenverarbeitungseinrichtung implementierten ersten Instanz der Software-Applikation an die in der zweiten Datenverarbeitungseinrichtung implementierten zweite Instanz der Software-Applikation.

Es ist ein Vorteil des genannten Verfahrens, dass es eine zumindest im wesentlichen unterbrechungsfreie und/oder stoßfreie Verschiebung der Software-Applikation von der ersten zur zweiten Datenverarbeitungseinrichtung ermöglicht. Insbesondere kann das genannte Verfahren auch eine unterbrechungsfreie und/oder stoßfreie Verschiebung der Software-Applikation von der ersten zur zweiten Datenverarbeitungseinrichtung ermöglichen.

Dies wird zumindest unter anderem dadurch erreicht, dass die während des Ablaufs der Software-Applikation hinterlegten Zustandsdaten zu einem bestimmten Zeitpunkt erfasst und dann nachfolgend an die zweite Datenverarbeitungseinrichtung übertragen werden. Dann wird dort zu einem späteren Zeitpunkt die zweite Instanz der Software-Applikation unter Verwendung der übertragenen Zustandsdaten gestartet. Nachfolgend wird diese weitere Instanz der Software-Applikation quasi "vorgespult", und zwar so lange, bis die erste und zweite Instanz der Software-Applikation synchron laufen.

Auf diese Weise ermöglicht das beschriebene Verfahren z.B. auch beim Bestehen hoher Echtzeit-Anforderungen, eine im Wesentlichen stoß- oder unterbrechungsfreie Verschiebung der Software-Applikation von der ersten zur zweiten Datenverarbeitungseinrichtung, da es wegen des "Vorspul-Mechanismus" nicht notwendig ist, Zustandsdaten in Echtzeit von der ersten zur zweiten Datenverarbeitungseinrichtung zu übertragen.

Dabei wird unter stoß- und/oder unterbrechungsfrei beispielsweise verstanden, dass die Funktionalität der Software-Applikation auch im Rahmen der Verschiebung der Software-Applikation von der ersten zur zweiten Datenverarbeitungseinrichtung nicht unterbrochen wird. Dies kann beispielsweise derart ausgebildet und eingerichtet sein, dass einer nach außen sichtbaren Wirkung der Software-Applikation die Verschiebung von der ersten zur zweiten Datenverarbeitungseinrichtung nicht angemerkt werden kann.

Dabei kann die stoß- und/oder unterbrechungsfreie Verschiebung der Software-Applikation von der ersten zur zweiten Datenverarbeitungseinrichtung beispielsweise derart ausgebildet und eingerichtet sein, dass der Wechsel der Funktionalität der Software-Applikation von der ersten zur zweiten Datenverarbeitungseinrichtung schneller abläuft als übliche oder festgelegte Steuerungs-, Reaktions- oder Responsezeiten, die für die derartige Applikation vorgesehen sind oder erwartet werden.

Unter dem Wechsel der Funktionalität der Software-Applikation wird dabei verstanden, dass die (z.B. nach außen sichtbare) Erzeugung der Wirkung der Ausführung der Software-Applikation von der Ausführung der ersten Instanz der Software-Applikation durch die erste Datenverarbeitungseinrichtung zur Ausführung der zweiten Instanz Software-Applikation durch die zweite Datenverarbeitungseinrichtung wechselt.

Beispielsweise kann eine solche Verschiebung schneller als eine durch eine Echtzeit-Spezifikation vorgegebene maximale Antwortzeiten erfolgen. Ist für die Ausführung der Software-Applikation ein zyklischer Programmablauf vorgesehen, kann eine solche Verschiebung der Funktionalität der Software-Applikation von der ersten zur zweiten Datenverarbeitungseinrichtung beispielsweise im Rahmen einer zugehörigen Zykluszeit oder auch schneller eine zugehörige Zykluszeit erfolgen.

Die erste und/oder zweite Datenverarbeitungseinrichtung kann beispielsweise mobil oder auch stationär ausgebildet und eingerichtet sein. Die Datenverarbeitungseinrichtung kann beispielsweise als ein Computer, ein Personalcomputer (PC), eine Workstation, ein Smartphone, ein Tablet-Computer, ein Computernetzwerk, eine Cloud, eine Steuerungseinrichtung, ein Controller, eine speicherprogrammierbare Steuerung oder vergleichbare Geräte oder Einrichtungen ausgebildet und eingerichtet sein.

Weiterhin kann die erste und/oder zweite Datenverarbeitungseinrichtung beispielsweise ein Gehäuse aufweisen. Die erste und/oder zweite Datenverarbeitungseinrichtung kann z.B. jeweils als eine gesonderte bauliche Einheit ausgebildet und eingerichtet sein. Weiterhin kann die ersten und/oder zweite Datenverarbeitungseinrichtung jeweils auch als eine logische und/oder funktionale Einheit innerhalb eines größeren Gesamtsystems ausgebildet und eingerichtet sein (z.B. als eine "Datenverarbeitungseinrichtungs-App" in einer Cloud).

Die erste Speichereinrichtung zur Speicherung der Zustandsdaten kann beispielsweise in der ersten Datenverarbeitungseinrichtung oder auch in einer mit der ersten Datenverarbeitungseinrichtung kommunikativ verbundenen weiteren Datenverarbeitungseinrichtung oder externen Datenspeicher vorgesehen sein.

Mit der ersten Datenverarbeitungseinrichtung kommunikativ verbundene externe Datenspeicher können beispielsweise in einer weiteren Datenverarbeitungseinrichtung, einem Computernetzwerk, einer Cloud, einem externen elektronischen Speicher (Speicherkarte, Speicherbaustein, USB-Stick, ...), einem externen elektronischen Massenspeicher (Festplatte, SSD, ...) oder vergleichbaren Einrichtungen vorgesehen und/oder implementiert sein.

Die Speichereinrichtung und/oder die Modul-Speichereinrichtung kann dabei als eine elektronische Speichereinrichtung bzw. digitale Speichereinrichtung ausgebildet und eingerichtet sein.

Solch eine Speichereinrichtung kann beispielsweise als ein nicht flüchtiger Datenspeicher ausgebildet sein (ein sogenannter "non-volatile memory"), der zur dauerhaften bzw. längerfristigen Datenspeicherung ausgebildet und eingerichtet ist. Solche Speichereinrichtungen können beispielsweise als SSD-Speicher, SSD-Karten, Festplatten, CDs, DVDs, EPROMs oder Flash-Speicher oder vergleichbare Speichereinrichtungen sein.

Weiterhin kann eine Speichereinrichtung auch als flüchtiger Speicher ("volatile memory") ausgebildet und eingerichtet sein. Solche Speicher können beispielsweise als sogenanntes DRAM oder dynamisches RAM ("Dynamic Random Access Memory") oder SRAM ("static Random Access Memory") ausgebildet und eingerichtet sein.

Eine Speichereinrichtung mit gespeicherten Daten und/oder Informationen kann beispielsweise auch als ein integrierter Schaltkreis ausgebildet und eingerichtet sein, in welchem zumindest unter anderem die Daten und/oder Informationen implementiert sind.

Dabei kann die Datenkommunikation der ersten Instanz der Software-Applikation mit der weiteren Software-Applikation und/oder der Vorrichtung beispielsweise über einen internen und/oder einen externen Datenbus erfolgen. Genauso kann die Datenkommunikation der zweiten Instanz der Software-Applikation mit der weiteren Software-Applikation und/oder der Vorrichtung beispielsweise über einen internen und/oder externen Datenbus erfolgen. Die erste und/oder zweite Datenverarbeitungseinrichtung kann beispielsweise jeweils einen entsprechenden internen Datenbus umfassen.

Ein Datenbus kann beispielsweise als ein sogenannter Feldbus ausgebildet und eingerichtet sein oder auch ein proprietäres und/oder internes Kommunikations-Datenformat und/oder Kommunikations-Protokoll aufweisen.

Der Datenbus kann beispielsweise einen von den Kommunikationspartnern, die über den Datenbus kommunizieren, gemeinsam genutzten Datenbereich aufweisen. Dieser gemeinsam genutzten Datenbereich kann beispielsweise zur (zwischen-) Speicherung von zu kommunizierenden, kommunizierbaren und/oder im Kommunikationsablauf befindlichen Daten ausgebildet und eingerichtet sein. Beispielsweise kann ein solch gemeinsam genutzter Datenbereich als sogenannter "Shared Memory" oder sogenannter "Dual Port RAM" ausgebildet und eingerichtet sein.

Die weitere Software-Applikation kann jede Software-Applikation sein. Beispielsweise kann die weitere-Software-Applikation zur Kommunikation mit mindestens einer anderen Software-Applikation ausgebildet und eingerichtet sein. Dabei kann die weitere Software-Applikation beispielsweise in der ersten, der zweiten oder einer weiteren Datenverarbeitungseinrichtung implementiert sein.

Die Vorrichtung kann beispielsweise als ein Modul, eine Komponente oder auch als eine Anlage ausgebildet und eingerichtet sein. Sie kann beispielsweise weiterhin als eine Maschine, ein Gerät, ein Roboter, eine Produktionsanlage oder Vergleichbares ausgebildet und eingerichtet sein oder auch derartige Teile als Komponenten umfassen. Solch eine Vorrichtung oder Anlage kann z.B. ein oder mehrere Komponenten, Module, Antriebe, Sensoren, Maschinen, Geräte, Kommunikationseinrichtungen oder Ähnliches umfassen.

Zustandsdaten können beispielsweise auf die Software-Applikation und/oder den Ablauf der Software-Applikation bezogene interne Zustandsdaten und oder interne Daten sein. Solche internen Daten können beispielsweise Zähler, Flags, Zustandsdaten oder ähnliches sein. Zustandsdaten können beispielsweise temporäre für einen ordnungsgemäßen Ablauf einer Software-Applikation notwendige Daten sein.

Zustandsdaten können beispielsweise auch einen internen Zustand der Software-Applikation und/oder des Ablaufs der Software-Applikation beschreiben. In diesem Sinn können Zustandsdaten beispielsweise beschreiben, in welchem Ablaufschritt, welcher Iteration, welchem Ablaufs-Zustand oder ähnlichem sich die Software-Applikation befindet.

Zustandsdaten können Hilfsdaten sein, die zum ordnungsgemäßen Ablauf der Software-Applikation notwendig sind oder verwendet werden. Solche Zustandsdaten sind häufig nur intern gespeichert und sind in der Regel rein zustandsbehaftete Elemente.

In einer vorteilhaften Ausgestaltung kann weiterhin vorgesehen sein, dass die Zustandsdaten gesondert gekennzeichnet sind. Diese Kennzeichnung kann beispielsweise durch ein System für die Erstellung einer solchen Software-Applikation erfolgen oder eingerichtet werden, wie beispielsweise durch ein sogenanntes Engineering-System. Die Kennzeichnung kann beispielsweise gemeinsam mit den Zustandsdaten gespeichert sein oder auch in einer gesonderten Datei oder einem gesonderten Speicherbereich. Weiterhin kann vorgesehen sein, dass die Zustandsdaten gesondert gespeichert sind, beispielsweise in einer gesonderten Datei, einem gesonderten Speicherbereich, einer gesonderten Speichereinrichtung oder ähnlichem.

Start-Zustandsdaten im Sinne der vorliegenden Beschreibung sind diejenigen Zustandsdaten gemäß der vorliegenden Beschreibung bezüglich eines internen Zustands der ersten Datenverarbeitungseinrichtung und/oder bezüglich eines internen Ablaufs der ersten Instanz der Software-Applikation, die in der ersten Speichereinrichtung der ersten Datenverarbeitungseinrichtung zum ersten Zeitpunkt gespeichert waren oder sind.

Dabei kann die Übertragung der Start-Zustandsdaten beispielsweise von der ersten zur zweiten Datenverarbeitungseinrichtung und/oder von der ersten Speichereinrichtung zur zweiten Speichereinrichtung erfolgen.

Die kommunikative Kopplung der zweiten Speichereinrichtung mit der zweiten Datenverarbeitungseinrichtung kann dabei derart ausgebildet und eingerichtet sein, dass die zweite Datenverarbeitungseinrichtung die zweite Speichereinrichtung umfasst. Weiterhin kann diese kommunikative Kopplung auch derart ausgebildet sein, dass die zweite Speichereinrichtung in einem mit der zweiten Datenverarbeitungseinrichtung kommunikativ verbundenen externen Datenspeicher vorgesehen ist.

Solche mit der zweiten Datenverarbeitungseinrichtung kommunikativ verbundenen externen Datenspeicher können beispielsweise in einer weiteren Datenverarbeitungseinrichtung, einem Computernetzwerk, einer Cloud, einem externen elektronischen Speicher (Speicherkarte, Speicherbaustein, USB-Stick, ...), einem externen elektronischen Massenspeicher (Festplatte, SSD, ...) oder vergleichbaren Einrichtungen vorgesehen und/oder implementiert sein.

Dabei können die genannten Speichereinrichtungen weiterhin gemäß der vorliegenden Beschreibung ausgebildet und eingerichtet sein.

Weiterhin kann der zweite Zeitpunkt beispielsweise gleich dem ersten Zeitpunkt sein oder zeitlich nach dem ersten Zeitpunkt liegen.

Die Ausführung der zweiten Instanz der Software-Applikation in der zweiten Datenverarbeitungseinrichtung in Verfahrensschritt c.) gemäß der vorliegenden Beschreibung kann beispielsweise derart erfolgen, dass der Ablauf schneller erfolgt, als der parallele Ablauf der ersten Instanz der Software-Applikation in der ersten Datenverarbeitungseinrichtung. Auf diese Weise kann erreicht werden, dass, obwohl die zweite Instanz der Software-Applikation in der zweiten Datenverarbeitungseinrichtung mit den Start-Zustandsdaten später anläuft als dies die erste Instanz der Software-Applikation in der ersten Datenverarbeitungseinrichtung tat, die zweite Instanz der Software-Applikation zum genannten dritten Zeitpunkt synchron mit der ersten Instanz der Software-Applikation läuft. In gewisser Weise kann dies als ein "Vorspulen" der zweiten Instanz der Software-Applikation betrachtet werden, bis beide Instanzen der Software-Applikation synchron laufen.

Der schnellere Ablauf der zweiten Instanz der Software-Applikation kann beispielsweise durch Verwendung eines anderen Zeittakts, Veränderung der Zeitbasis, Reduktion einer Zykluszeit, Veränderung des Ablaufschemas, die Verwendung einer weiteren Zeitbasis oder vergleichbare Mechanismen erreicht werden.

Der dritte Zeitpunkt kann beispielsweise derjenige Zeitpunkt sein, bei welchen die erste und zweite Instanz der Software-Applikation erstmalig synchron laufen. Weiterhin kann der dritte Zeitpunkt auch ein Zeitpunkt nach dem erstmaligen Synchron-Laufen der ersten und zweiten Instanz der Software-Applikation sein.

In einer vorteilhaften Ausgestaltung kann vorgesehen sein, dass die Ausführung der zweiten Instanz der Software-Applikation in der zweiten Speichereinrichtung der zweiten Datenverarbeitungseinrichtung dann derart erfolgt, dass ab einem dem zweiten Zeitpunkt nachfolgenden dritten Zeitpunkt die erste Instanz der Software-Applikation in der ersten Speichereinrichtung der ersten Datenverarbeitungseinrichtung und die zweite Instanz der Software-Applikation in der zweiten Speichereinrichtung der zweiten Datenverarbeitungseinrichtung synchron ablaufen.

Die Übergabe der Datenkommunikation mit der weiteren Software-Applikation oder der Vorrichtung von der ersten Instanz der Software-Applikation an die zweite Instanz der Software-Applikation kann beispielsweise zu dem dritten Zeitpunkt oder auch einen dem dritten Zeitpunkt nachfolgenden Zeitpunkt erfolgen.

Die Übergabe kann dabei beispielsweise derart erfolgen, dass im Rahmen der Übergabe die Kommunikation der ersten Instanz der Software-Applikation mit der weiteren Software-Applikation oder Vorrichtung beendet wird, und die Kommunikation der zweiten Instanz der Software-Applikation mit der weiteren Software-Applikation oder der Vorrichtung gestartet wird.

Das Stoppen der Kommunikation der ersten Instanz der Software-Applikation mit der weiteren Software-Applikation oder der Vorrichtung und das Starten der Kommunikation der zweiten Instanz der Software-Applikation mit der weiteren Software-Applikation oder der Vorrichtung kann beispielsweise simultan erfolgen oder auch innerhalb eines vorgegebenen oder vorgebbaren Zeitfensters. Dabei kann das vorgegebene oder vorgebbare Zeitfenster beispielsweise einer Umschaltzeit entsprechen. Die Größe einer solchen Umschaltzeit kann beispielsweise durch Echtzeit-Anforderungen oder sonstige Anforderungen an eine unterbrechungsfreies oder stoßfreies umschalten gegeben oder bestimmt sein.

In einer vorteilhaften Ausgestaltung kann ein Verfahren gemäß der vorliegenden Beschreibung derart ausgebildet und eingerichtet sein,
- dass im Rahmen von Verfahrensschritt a.) bei der Datenkommunikation Eingabedaten von der weiteren Software-Applikation und/oder Vorrichtung, und/oder Ausgabedaten für die weitere Software-Applikation und/oder Vorrichtung gespeichert werden,
- dass in einem weiteren, dem Verfahrensschritt b.) vorausgehenden Verfahrensschritt a1.) ein Tracing-Ablauf zur Speicherung von jeweils aktuellen Eingabe- und/oder Ausgabedaten in einer I/O-Tracing-Datenbank gestartet wird, und
- dass im Rahmen des Verfahrensschritts c.) das Starten der zweiten Instanz der Software-Applikation weiterhin unter Verwendung von in der I/O-Tracing-Datenbank bezüglich des ersten Zeitpunkts gespeicherten Eingabe- und/oder Ausgabedaten erfolgt.

Mit dieser Ausgestaltung der Erfindung wird die Übergabe der Software-Applikation von der ersten zur zweiten Datenverarbeitungsvorrichtungen weiter vereinfacht. Dadurch, dass für einen Betrieb der Software-Applikation verwendete Eingabedaten und/oder Ausgabedaten in einer I/O-Tracing-Datenbank gespeichert sind, wird das "Vorspulen" der zweiten Instanz der Software-Applikation in der zweiten Datenverarbeitungseinrichtung weiter vereinfacht.

Beim Start der zweiten Instanz der Software-Applikation in der zweiten Datenverarbeitungseinrichtung werden dann neben den Start-Zustandsdaten, die dem ersten Zeitpunkt zugeordnet sind, auch diejenigen Eingabedaten und/oder Ausgabedaten, die zum ersten Zeitpunkt vorlagen, aus der I/O-Tracing-Datenbank herangezogen. Bei dem weiteren Ablauf der zweiten Instanz der Software-Applikation im Rahmen des Verfahrensschritts c.) werden dann jeweils die zu den entsprechenden Zustandsdaten zeitlich passenden Eingabedaten und/oder Ausgabedaten aus der I/O-Tracing-Datenbank herangezogen und so ein korrekter Vorlauf bzw. Ablauf der zweiten Instanz der Software-Applikation bis zum dritten Zeitpunkt erreicht.

Eingabedaten sind dabei solche Daten, die von der weiteren-Software-Applikation und/oder der Vorrichtung zur Software-Applikation übertragen werden. Solche Eingabedaten werden in der Regel im Rahmen des Ablaufs der Software-Applikation verwendet.

Ausgabedaten sind dabei solche Daten, die von der Software-Applikation an die weitere Software-Applikation und/oder die Vorrichtung übertragen werden. Solche Ausgabedaten werden in der Regel für den Ablauf oder die Einrichtung der weiteren Software-Applikation und/oder eine Steuerung oder Bedienung der Vorrichtung verwendet. Eingabe- und/oder Ausgabedaten bezüglich der weiteren Software-Applikation können beispielsweise solche Daten sein, die zwischen der Software-Applikation und der weiteren Software-Applikation ausgetauscht werden bzw. ausgetauscht werden sollen.

Eingabe- und/oder Ausgabedaten in Bezug auf die Vorrichtung können beispielsweise Daten sein, die im Rahmen der Steuerung einer Maschine oder Anlage von dieser kommen (Sensordaten, Maschinenzustandsdaten oder Kenndaten) oder an diese geschickt werden (Steuerdaten für Aktoren oder zum Einstellen oder Setzen von Geräteparametern).

Ist die Datenverarbeitungseinrichtung beispielsweise als eine speicherprogrammierbare Steuerung ausgebildet und eingerichtet, dann können Eingabe- und/oder Ausgabedaten beispielsweise in einem sogenannten Prozessabbild der speicherprogrammierbaren Steuerung gespeichert sein.

In einer vorteilhaften Ausgestaltung kann die I/O-Tracing-Datenbank beispielsweise in der ersten oder zweiten Datenverarbeitungseinrichtung gespeichert sein.

Das Speichern der jeweils aktuellen Eingabe- und/oder Ausgabedaten kann beispielsweise derart ausgebildet und eingerichtet sein, dass beispielsweise zu periodisch oder regelmäßig aufeinanderfolgenden Zeitpunkten die jeweils aktuellen Eingabe- und/oder Ausgabedaten in der I/O-Tracing-Datenbank gespeichert werden. Die Periode bzw. der Zyklus für die Abspeicherung der jeweiligen Eingabe- und/oder Ausgabedaten kann beispielsweise vorgegeben sein oder einstellbar, beispielsweise von einem Benutzer oder auch einem Automatismus.

Bei einer zyklischen Programmausführung beispielsweise der Software-Applikation können die jeweils aktuellen Eingabe- und/oder Ausgabedaten einmal pro Programmzyklus in der I/O-Tracing-Datenbank gespeichert werden. Dies kann insbesondere jeweils zwischen zwei Programmzyklen erfolgen.

Die Speicherung der jeweils aktuellen Eingabe- und/oder Ausgabedaten in der I/O-Tracing-Datenbank kann beispielsweise derart erfolgen, dass zu den einzelnen Eingabe- und/oder Ausgabedaten jeweils derjenige Zeitpunkt mitgespeichert wird, zu welcher diese Daten vorlagen. Weiterhin können die Eingabe- und/oder Ausgabedaten in der I/O-Tracing-Datenbank auch derart gespeichert sein, dass zu einem bestimmten Zeitpunkt vorliegende Eingabe- und/oder Ausgabedaten als ein Datensatz in der I/O-Tracing-Datenbank gespeichert sind, und diesem Datensatz der Zeitpunkt zugeordnet ist, zu welchem diese Daten vorlagen.

Der genannte Zeitpunkt, zu welchem die jeweiligen Eingabe- und/oder Ausgabedaten vorlagen, kann beispielsweise von der ersten Datenverarbeitungsvorrichtung, einer Ablaufumgebung der ersten Instanz der Software-Applikation oder beispielsweise auch der I/O-Tracing-Datenbank oder einem diesem zugeordneten Betriebssystem erfasst und/oder zugeordnet werden.

Die I/O-Tracing-Datenbank kann beispielsweise in einem SQL-Format oder auch einem sogenannten NoSQL-Format vorliegen. Dabei kann die Datenbank beziehungsweise die Speicherung in der Datenbank gemäß der vorliegenden Beschreibung ausgebildet und eingerichtet sein oder Komponenten gemäß der vorliegenden Beschreibung umfassen.

Dass das Starten der zweiten Instanz der Software-Applikation im Rahmen des Verfahrensschritts c.) unter Verwendung der in der I/O-Tracing-Datenbank bezüglich des ersten Zeitpunkts gespeicherten Eingabe- und/Ausgabedaten erfolgt, kann beispielsweise derart ausgebildet und eingerichtet sein, dass beim Start der zweiten Instanz der Software-Applikation im Rahmen des Verfahrensschritts c.) die Start-Zustandsdaten bezüglich des ersten Zeitpunkts und die Eingabe- und/oder Ausgabedaten bezüglich des ersten Zeitpunkts als die für den Anlauf der zweiten Instanz der Software-Applikation zu verwendenden Daten herangezogen werden.

Weiterhin kann vorgesehen sein, dass den in der I/O-Tracing-Datenbank gespeicherten Eingabe- und/oder Ausgabedaten jeweils mindestens ein Zeitwert zugeordnet ist.

In der I/O-Tracing-Datenbank können die jeweiligen I/O-Daten jeweils mit einem Zeitwert, zu dem sie aktuell vorlagen, gespeichert sein. Dieser Zeitwert kann z.B. von der ersten Datenverarbeitungseinrichtung ermittelt und/oder zugeordnet werden. Weiterhin kann der Zeitwert z.B. auch von der zweiten Datenverarbeitungseinrichtung ermittelt und/oder zugeordnet werden.

Dabei kann vorgesehen sein, dass beispielsweise jedem Eingabe- und/oder Ausgabe Datum ein Zeitwert zugeordnet ist. Weiterhin kann auch vorgesehen sein, dass einer Gruppe von Eingabe- und/oder Ausgabedaten, die zum gleichen Zeitpunkt vorlagen, ein Zeitwert zugeordnet ist.

Solche Zeitwerte werden häufig auch als sogenannte "Zeitstempel" bezeichnet.

Weiterhin kann der zu den jeweiligen Eingabe- und/oder Ausgabedaten gehörende Zeitwert von der ersten oder zweiten Datenverarbeitungseinrichtung erfasst, dann den jeweiligen Eingabe- und/oder Ausgabedaten zugewiesen und dann mit den zugehörigen Daten in der I/O-Tracing-Datenbank gespeichert werden. Alternativ kann der Zeitwert auch im Rahmen der Speicherung der jeweiligen Eingabe- und/oder Ausgabedaten in der I/O-Tracing-Datenbank erfasst und den jeweiligen Daten zugeordnet werden. Die Erfassung und Zuordnung kann beispielsweise durch die I/O-Tracing-Datenbank oder auch eine Ablaufumgebung, in welcher die Datenbank läuft, vorgenommen werden.

Die vorstehend genannte Aufgabe wird weiterhin gelöst durch ein Verfahren zum Übertragen einer Software-Applikation von einer ersten zu einer zweiten Datenverarbeitungseinrichtung, umfassend die nachfolgenden Schritte:
A1.) Ablauf einer in der ersten Steuereinrichtung implementierten ersten Instanz der Software-Applikation, wobei im Rahmen des Ablaufs der ersten Instanz der Software-Applikation innerhalb der ersten Datenverarbeitungseinrichtung
   - eine Datenkommunikation der ersten Instanz der Software-Applikation mit einer weiteren Software-Applikation und/oder einer Vorrichtung erfolgt,
   - im Rahmen der Datenkommunikation Eingabedaten von der weiteren Software-Applikation und/oder Vorrichtung, und/oder Ausgabedaten für die weitere Software-Applikation und/oder Vorrichtung gespeichert werden, und
   - Zustandsdaten bezüglich eines internen Zustands der ersten Datenverarbeitungseinrichtung und/oder bezüglich eines internen Ablaufs der ersten Instanz der Software-Applikation in einer ersten Speichereinrichtung gespeichert werden;
B1.) Starten eines Tracing-Ablaufs zur Speicherung von jeweils aktuellen Eingabe- und/oder Ausgabedaten in einer I/O-Tracing-Datenbank;
C1.) Übertragen von zu einem ersten Zeitpunkt in der ersten Datenverarbeitungseinrichtung vorliegenden Start-Zustandsdaten zu einer mit der zweiten Datenverarbeitungseinrichtung kommunikativ gekoppelten zweiten Speichereinrichtung;
D1.) Starten einer in der zweiten Datenverarbeitungseinrichtung implementierten zweiten Instanz der Software-Applikation zu einem zweiten Zeitpunkt unter Verwendung der Start-Zustandsdaten sowie von in der I/O-Tracing-Datenbank bezüglich des ersten Zeitpunkts gespeicherten Eingabe- und/oder Ausgabedaten erfolgt,
   wobei die Ausführung der zweiten Instanz der Software-Applikation in der zweiten Datenverarbeitungseinrichtung dann derart erfolgt, dass zu einem dem zweiten Zeitpunkt nachfolgenden dritten Zeitpunkt die erste Instanz der Software-Applikation in der ersten Datenverarbeitungseinrichtung und die zweite Instanz der Software-Applikation in der zweiten Datenverarbeitungseinrichtung synchron ablaufen;
E1.) Übergabe Datenkommunikation mit der weiteren Software-Applikation oder Vorrichtung von der in der ersten Datenverarbeitungseinrichtung implementierten ersten Instanz der Software-Applikation an die in der zweiten Datenverarbeitungseinrichtung implementierten zweiten Instanz der Software-Applikation.

In einer vorteilhaften Ausgestaltung kann vorgesehen sein, dass ein Verfahren gemäß der vorliegenden Beschreibung derart ausgestaltet und eingerichtet ist, dass die Datenkommunikation mit der weiteren Software-Applikation und/oder der Vorrichtung unterbrechungsfrei abläuft.

Dabei wird unter unterbrechungsfrei beispielsweise verstanden, dass die Kommunikation der Software-Applikation mit der weiteren Software-Applikation und/oder der Vorrichtung unter Berücksichtigung der üblichen oder auch definierten Zeittoleranzen im Rahmen dieser Kommunikation nicht unterbrochen wird. Dies kann beispielsweise derart ausgebildet und eingerichtet sein, dass eine nach außen sichtbare Wirkung der Software-Applikation trotz einer Verschiebung von der ersten zur zweiten Datenverarbeitungseinrichtung im Wesentlichen unverändert ist.

Die genannten Zeittoleranzen können beispielsweise im Rahmen eines Kommunikations-Standards oder einer Definition eines Kommunikationsprotokolls oder einer Implementierung eines Kommunikationsstandards oder Kommunikationsprotokolls vorgegebene maximale Antwortzeiten und/oder Reaktionszeiten sein. Eine entsprechende Datenkommunikation kann beispielsweise als unterbrechungsfrei betrachtet werden, wenn ein Kommunikationspartner auch während der Verschiebung der Software-Applikation von der ersten zur zweiten Datenverarbeitungseinrichtung eine in diesem Sinne störungsfreie Kommunikation mit der ersten bzw. zweiten Datenverarbeitungseinrichtung durchführen kann. Diese störungsfreie Kommunikation bezieht sich z.B. auf die im Rahmen dieser Datenkommunikation implementierten Standards und/oder Protokolle unter Berücksichtigung der entsprechenden üblichen Genauigkeiten und Toleranzen.

Weiterhin kann ein Verfahren nach gemäß der vorliegenden Beschreibung derart ausgebildet und eingerichtet sein, dass die erste Instanz der Software-Applikation in der ersten Datenverarbeitungseinrichtung und die zweite Instanz der Software-Applikation in der zweiten Datenverarbeitungseinrichtung jeweils zyklisch ausgeführt werden.

Dabei wird allgemein unter einer zyklischen Ausführung einer Software-Applikation verstanden, dass die Software-Applikation, nachdem sie beendet ist, wieder von vorne abläuft. Solche zyklischen Ausführungen werden häufig in der Regel mit Echtzeit-Betriebssystemen und/oder Echtzeit-Steuerungen von Maschinen oder Anlagen verwendet. So wird eine zyklischen Programmausführung beispielsweise häufig im Rahmen der Programmausführung in speicherprogrammierbaren Steuerungen eingesetzt.

In einer vorteilhaften Ausgestaltung kann die zyklische Programmausführung beispielsweise derart ausgebildet und eingerichtet sein, dass vor dem Beginn eines Programmzyklus beispielsweise für den Programmablauf relevante Eingangsdaten eingelesen werden, beispielsweise in einen speziellen Speicherbereich, und danach dann ein Zyklus des Programms unter Verwendung dieser Eingangsdaten abläuft. Während oder nach dem Ende des Programmzyklus werden dann die im Verlauf des Programmzyklus erzeugten Ausgangsdaten beispielsweise in einem speziellen Speicherbereich geschrieben und/oder ausgegeben. Dann folgt der nächste Zyklus wiederum mit dem Einlesen der nächsten Eingangsdaten.

Die Zeit für den Ablauf eines Programmzyklus wird häufig Zykluszeit genannt. Diese kann verschieden definiert sein, beispielsweise als die reine Ablaufzeit eines Programmzyklus. Weiterhin kann die Zykluszeit auch definiert sein als die Gesamtzeit, die für ein Einlesen der Eingangsdaten, den Ablauf eines Zyklus des Programms und das Schreiben der Ausgangsdaten benötigt wird.

Ein Verfahren gemäß der vorliegenden Beschreibung kann weiterhin derart ausgebildet und eingerichtet sein, dass die erste und zweite Datenverarbeitungseinrichtung jeweils ein Echtzeit-Betriebssystem umfassen, wobei die Ausführung der ersten Instanz der Software-Applikation in der ersten Datenverarbeitungseinrichtung und die Ausführung der zweiten Instanz der Software-Applikation in der zweiten Datenverarbeitungseinrichtung jeweils im Rahmen des jeweiligen Echtzeit-Betriebssystems der jeweiligen Datenverarbeitungseinrichtung erfolgt.

In einer weiteren vorteilhaften Ausgestaltung kann zudem der Ablauf der ersten Instanz der Software-Applikation in der ersten Datenverarbeitungseinrichtung sowie der Ablauf der zweiten Instanz der Software-Applikation in der zweiten Datenverarbeitungseinrichtung derart ausgebildet und eingerichtet sein, dass die Datenkommunikation der jeweils aktiven Instanz der Software-Applikation mit der weiteren Software-Applikation und/oder der Vorrichtung als Echtzeitkommunikation ausgebildet und eingerichtet ist.

Ganz allgemein wird hier unter dem Begriff Echtzeit der Betrieb eines Rechnersystems verstanden, bei dem Programme zur Verarbeitung anfallender Daten auf eine Weise ständig betriebsbereit sind, dass die Verarbeitungsergebnisse innerhalb einer vorgegebenen Zeitspanne verfügbar sind. Die Daten können je nach Anwendungsfall nach einer zeitlich zufälligen Verteilung oder zu vorbestimmten Zeiten anfallen.

Unter einem Echtzeit-Betriebssystem wird ein Betriebssystem für eine Datenverarbeitungseinrichtung verstanden, welche derart ausgebildet und eingerichtet ist, dass Anfragen eines Anwenderprogramms oder auch ein über eine Hardwareschnittstelle eintreffendes Signal innerhalb einer im Vorhinein festgelegten oder festlegbaren Zeitspanne gesichert verarbeiten werden können. Hierbei ist wesentlich, dass es überhaupt eine solche zusicherbare Zeitspanne gibt. Wie lange diese Zeitspanne ist, ist nicht wesentlich für die Tatsache, dass ein bestimmtes Betriebssystem ein Echtzeit-Betriebssystem ist.

Ein Echtzeitbetriebssystem kann beispielsweise als Echtzeit-Betriebssystem im Sinne der DIN 44300 ausgebildet und eingerichtet sein.

Eine Echtzeitkommunikation kann beispielsweise derart ausgebildet und eingerichtet sein, dass eine vorgegebene oder vorgebbare Echtzeitanforderung eingehalten wird. Solche Echtzeitanforderungen können beispielsweise eine zu garantierende Übertragungsbandbreite oder auch eine einzuhaltende Latenzzeit der Übertragung betreffen. Dabei kann die Echtzeitkommunikation beispielsweise als eine Echtzeit-Ethernet-Kommunikation ausgebildet und eingerichtet sein, beispielsweise gemäß dem TSN-Standard. Weiterhin kann die Echtzeitkommunikation gemäß einem echtzeitfähigen Feldbus-Standard ausgebildet und eingerichtet sein.

Weiterhin kann die erste und zweite Instanz der Software-Applikation jeweils zur Echtzeit-Datenkommunikation mit der weiteren Software-Applikation und/oder der Vorrichtung ausgebildet und eingerichtet sein.

Dabei kann die Echtzeit-Kommunikation beispielsweise gemäß der vorliegenden Beschreibung ausgebildet und eingerichtet sein.

Zudem kann weiterhin die Datenkommunikation unter Verwendung eines von den beteiligten Kommunikationspartnern gemeinsam genutzten Speicherbereichs erfolgen.

Dabei kann beispielsweise den im gemeinsam genutzten Speicherbereich gespeicherten Daten, oder auch Gruppen solcher Daten, jeweils ein Zeitwert zugeordnet sein oder zuordenbar sein. Dabei wird unter "zuordenbar" beispielsweise verstanden, dass ein Zeitwert beispielsweise aus einer weiteren gespeicherten Größe (zum Beispiel einer Zykluszeit und einer Anzahl von Zyklen) ableitbar ist oder abgeleitet wird.

Der gemeinsam genutzte Speicherbereich kann beispielsweise als sogenannter Dual-Port-RAM oder auch als ein sogenannter "Shared Memory" ausgebildet und eingerichtet sein.

In einer weiteren vorteilhaften Ausgestaltung ist die Datenkommunikation zur Kommunikation von Werten ausgebildet und eingerichtet, die jeweils Variablen zugeordnet sind. Dabei können z.B. Werte, die einer bestimmten Variablen zugeordnet sind, und die zu verschiedenen Zeiten im gemeinsam genutzten Speicherbereich gespeicherte wurden, in einem der Variable zugeordneten Datenpuffer gespeichert werden.

Unter den beteiligten Kommunikationspartner werden die jeweils an der betrachteten Kommunikation teilnehmenden Partner, Software-Applikationen und/oder Instanzen verstanden.

In einer vorteilhaften Ausgestaltung ist die Datenkommunikation unter Verwendung eines gemeinsam genutzten Speicherbereichs als Echtzeit-Datenkommunikation ausgebildet und eingerichtet.

In einer weiteren vorteilhaften Ausgestaltung ist Daten, die im gemeinsam genutzten Speicherbereich im Rahmen der Kommunikation gespeichert sind, jeweils ein Zeitwert zugeordnet oder zuordenbar.

In einer weiteren vorteilhaften Ausgestaltung ist der einem Datum zugehörige Zeitwert ebenfalls im gemeinsam genutzten Speicherbereich gespeichert.

Ein Verfahren gemäß der vorliegenden Beschreibung kann weiterhin derart ausgebildet und eingerichtet sein,
dass im Rahmen eines Einrichtens der ersten Instanz der Software-Applikation in der ersten Datenverarbeitungseinrichtung eine Kennzeichnung der Zustandsdaten erfolgt.

Es kann beispielsweise ein sogenanntes Engineeringsystem vorgesehen sein, mit welchem z.B. die Software-Applikation erstellt, geändert und/oder auch innerhalb der entsprechenden Datenverarbeitungseinrichtung implementiert werden kann beziehungsweise wurde. Durch ein solches Engineeringsystem können dann z.B. bestimmten Daten als Zustandsdaten gekennzeichnet werden. Beim Implementieren bzw. Instanziieren der Software-Applikation kann diese Kennzeichnung dann ebenfalls auf der entsprechenden Steuereinrichtung hinterlegt werden und dann z.B. zur Identifikation der Zustandsdaten entsprechend einem Verfahren gemäß der vorliegenden Beschreibung verwendet werden. Diese Kennzeichnung kann auch direkt beim Implementieren bzw. Instanziieren der Software-Applikation erfolgen.

In einer vorteilhaften Ausgestaltung kann weiterhin die erste und zweite Datenverarbeitungseinrichtung jeweils als eine Steuereinrichtung zur Steuerung einer Vorrichtung oder Anlage ausgebildet und eingerichtet sein.

Ein Verfahren gemäß der vorliegenden Beschreibung kann beispielsweise vorteilhaft zum Verschieben einer Software-Applikation von einer ersten zu einer zweiten Steuereinrichtung eingesetzt werden. Steuereinrichtungen werden in der Regel für Steuerungs- und/oder Regelungs-Aufgaben eingesetzt. Dabei sind häufig beispielsweise Echtzeit-Anforderungen oder auch eine Ausfall-Sicherheit wesentliche zu erfüllende Kriterien. Die Verwendung eines Verfahrens gemäß der vorliegenden Beschreibung ermöglicht es hier beispielsweise, eine Software-Applikation von der ersten zur zweiten Steuereinrichtung zu verschieben, ohne dass die Funktionalität der Software-Applikation unterbrochen wird. Auf diese Weise kann das Verfahren beispielsweise derart ausgebildet und eingerichtet sein, dass dabei entsprechende Echtzeit-Anforderungen oder Response-Zeiten auch während der Verschiebung der Software-Applikation gewährleistet bleiben.

Die Steuereinrichtung kann beispielsweise als eine sogenannte speicherprogrammierbare Steuerung (SPS) ausgebildet und eingerichtet sein. Weiterhin kann die Steuerungseinrichtung auch als eine sogenannte modulare speicherprogrammierbare Steuerung (modulare SPS) eingerichtet und ausgestaltet sein.

Eine Steuereinrichtung kann jede Art von Computer oder Computersystem sein, welche zur Steuerung eines Apparats oder Geräts ausgebildet und eingerichtet ist. Bei einer Steuereinrichtung kann es sich auch um einen Computer, ein Computersystem oder eine sogenannte Cloud handeln, auf der eine Steuerungssoftware oder eine Steuerungssoftware-Anwendung, zum Beispiel eine Steuerungsanwendung, implementiert bzw. installiert ist. Eine solche in der Cloud implementierte Steuerungsanwendung kann z.B. als eine Applikation mit der Funktionalität einer speicherprogrammierbaren Steuerung ausgebildet und eingerichtet sein.

Die Steuereinrichtung kann weiterhin auch als ein sogenanntes Edge-Device ausgebildet und eingerichtet sein, wobei ein solches Edge-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung, einer zu steuernden Vorrichtung oder einer zu steuernden Anlage verbunden sein. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Die vorstehend genannte Aufgabe wird weiterhin gelöst von einem Datenverarbeitungssystem umfassend eine erste und zweite Datenverarbeitungseinrichtung gemäß der vorliegenden Beschreibung,
wobei das Datenverarbeitungssystem zum Übertragen einer Software-Applikation von der ersten zur zweiten Datenverarbeitungseinrichtung mittels eines Verfahrens gemäß der vorliegenden Beschreibung ausgebildet und eingerichtet ist.

Die Datenverarbeitungseinrichtungen, deren Kopplung sowie deren Elemente oder Komponenten können dabei weiterhin gemäß der vorliegenden Beschreibung ausgebildet und eingerichtet sein.

Dabei kann die erste Datenverarbeitungseinrichtung beispielsweise die erste Speichereinrichtung umfassen. Weiterhin kann die zweite Datenverarbeitungseinrichtung die zweite Speichereinrichtung umfassen.

Weiterhin kann die erste Datenverarbeitungseinrichtung einen zur Datenkommunikation mit der weiteren Software-Applikation und/oder der Vorrichtung verwendeten gemeinsam genutzten Speicherbereich gemäß der vorliegenden Beschreibung umfassen. Auch die zweite Datenverarbeitungseinrichtung kann weiterhin einen zur Datenkommunikation mit der weiteren Software-Applikation und/oder der Vorrichtung verwendeten gemeinsam genutzten Speicherbereich gemäß der vorliegenden Beschreibung umfassen.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Ein schematischer 1. Arbeitsschritt für ein Beispiel einer Verschiebung einer mit einer ersten Software-Applikation kommunizierenden zweiten Software-Applikation von einem ersten PC zu einem zweiten PC;
Figur 2: Ein schematischer 2. Arbeitsschritt für ein Beispiel einer Verschiebung einer mit einer ersten Software-Applikation kommunizierenden zweiten Software-Applikation von einem ersten PC zu einem zweiten PC;
Figur 3: Ein schematischer 3. Arbeitsschritt für ein Beispiel einer Verschiebung einer mit einer ersten Software-Applikation kommunizierenden zweiten Software-Applikation von einem ersten PC zu einem zweiten PC;
Figur 4: Ein schematischer 4. Arbeitsschritt für ein Beispiel einer Verschiebung einer mit einer ersten Software-Applikation kommunizierenden zweiten Software-Applikation von einem ersten PC zu einem zweiten PC;
Figur 5: Ein schematischer 5. Arbeitsschritt für ein Beispiel einer Verschiebung einer mit einer ersten Software-Applikation kommunizierenden zweiten Software-Applikation von einem ersten PC zu einem zweiten PC;
Figur 6: Ein schematischer 6. Arbeitsschritt für ein Beispiel einer Verschiebung einer mit einer ersten Software-Applikation kommunizierenden zweiten Software-Applikation von einem ersten PC zu einem zweiten PC;
Figur 7: Ein schematischer 7. Arbeitsschritt für ein Beispiel einer Verschiebung einer mit einer ersten Software-Applikation kommunizierenden zweiten Software-Applikation von einem ersten PC zu einem zweiten PC;
Figur 8: Ein schematischer 8. Arbeitsschritt für ein Beispiel einer Verschiebung einer mit einer ersten Software-Applikation kommunizierenden zweiten Software-Applikation von einem ersten PC zu einem zweiten PC;
Figur 9: Ein schematischer 9. Arbeitsschritt für ein Beispiel einer Verschiebung einer mit einer ersten Software-Applikation kommunizierenden zweiten Software-Applikation von einem ersten PC zu einem zweiten PC;
Figur 10: Ein schematischer 1. Arbeitsschritt für ein Beispiel einer Verschiebung einer mit einem Roboter kommunizierenden dritten Software-Applikation von einem ersten PC zu einem zweiten PC;
Figur 11: Ein schematischer 9. Arbeitsschritt für ein Beispiel einer Verschiebung einer mit einem Roboter kommunizierenden dritten Software-Applikation von einem ersten PC zu einem zweiten PC.

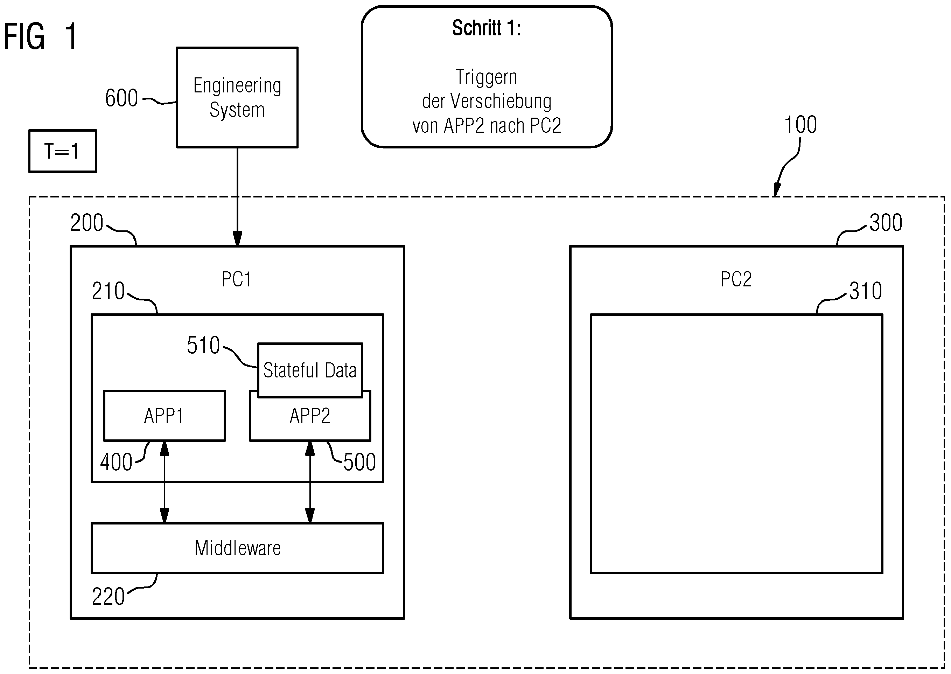

Die nachfolgend erläuterten Figuren 1-9 zeigen eine schematische Darstellung von Arbeitsschritten für eine beispielhafte Verschiebung einer zweiten Software-Applikation 500 von einem ersten PC 200 zu einem zweiten PC 300 (dabei steht PC für Personalcomputer).

Figur 1 zeigt dabei ein Datenverarbeitungssystem 100 welches den ersten PC 200 und den zweiten PC 300 umfasst. Dabei umfasst der erste PC 200 eine erste Speichereinrichtung 210, in welcher eine erste Software-Applikation 400 sowie eine erste Instanz einer zweite Software-Applikation 500 gespeichert sind. Weiterhin sind in der Speichereinrichtung 210 des ersten PC 200 Zustandsdaten 510 für die erste Instanz der zweiten Software-Applikation 500 gespeichert. Diese Zustandsdaten 510 umfassen verschiedene Zähler und Zustandsvariablen, die für einen ordnungsgemäßen Ablauf der ersten Instanz der zweiten Software-Applikation 500 notwendig sind.

Weiterhin umfasst der erste PC 200 eine sogenannte "Middleware" 220, welche einen Datenbus zur Kommunikation verschiedener Software-Applikationen innerhalb des ersten PCs 200 umfasst. Über diese Middleware 220 kommuniziert die erste Instanz der zweiten Software-Applikation 500 mit der ersten Software-Applikation 400. Die Middleware 220 hat weiterhin auch interne Steuerungsaufgaben bezüglich einer Ablaufsteuerung und Kommunikation innerhalb des ersten PC 200.

Figur 1 zeigt weiterhin ein Engineering System 600, welches zum Programmieren und Einrichten des ersten PC 200 ausgebildet und eingerichtet ist. Insbesondere wurden mit dem Engineeringsystem 600 die erste Software-Applikation 400 und die zweite Software-Applikation 500 erstellt und auf den ersten PC 200 instanziiert. Weiterhin wurden mithilfe des Engineerings-Systems 600 die Zustandsdaten 510 für die erste Instanz der zweiten Software-Applikation 500 speziell als "Zustandsdaten" gekennzeichnet, um sie von anderen, in der Speichereinrichtung 210 des ersten PC 200 gespeicherten Daten unterscheiden zu können.

Der zweite PC 300 umfasst ebenfalls eine Speichereinrichtung 310. Die weiteren Eigenschaften und der weitere Aufbau des zweiten PCs 300 wird dann im Rahmen der folgenden Arbeitsschritte erläutert.

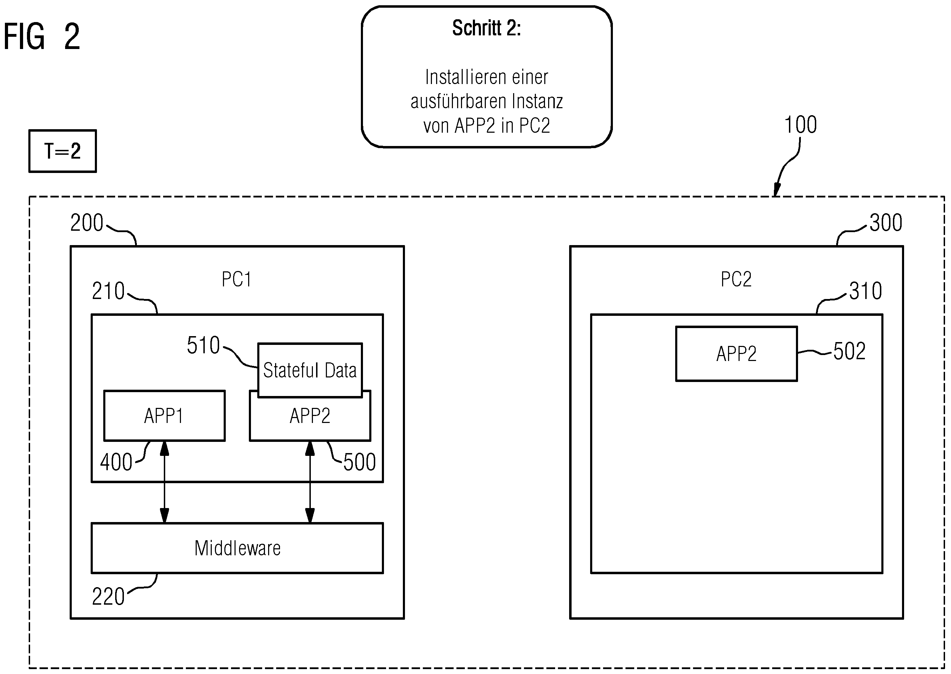

Figur 1 zeigt nun zu einem ersten Zeitpunkt T = 1 einen ersten Arbeitsschritt zur Verschiebung der Funktionalität der zweiten Software-Applikation 500 zum zweiten PC 300, wobei die Kommunikation zur ersten Software-Applikation 400 aufrechterhalten wird. Die Verschiebung der zweiten Software-Applikation wird dabei derart vorgenommen, dass ein Betrieb der ersten Instanz der zweiten Software-Applikation 500 im ersten PC 200 auf den Betrieb einer zweiten Instanz der zweiten Software-Applikation 502 (nicht in Figur 1 sondern erst in Figur 2 dargestellt) im zweiten PC 300 umgestellt wird.

In diesem in Figur 1 dargestellten ersten Schritt erfolgt ein Triggerbefehl von einer externen Einrichtung, beispielsweise dem Engineering System 600, an die Middleware 220 des ersten PC 200, wobei dieser Trigger dann die in Zusammenhang mit den nachfolgenden Figuren beschriebene Prozessfolge zur Verschiebung der Funktionalität der zweiten Software-Applikation 500 vom ersten PC 200 zum zweiten PC 300 auslöst.

Figur 2 zeigt das Ergebnis eines zweiten Arbeitsschritts zu einem Zeitpunkt T = 2. Innerhalb dieses zweiten Arbeitsschrittes wurde die bereits erwähnte zweite Instanz der zweiten Software-Applikation 502 in der Speichereinrichtung 310 des zweiten PC 300 installiert.

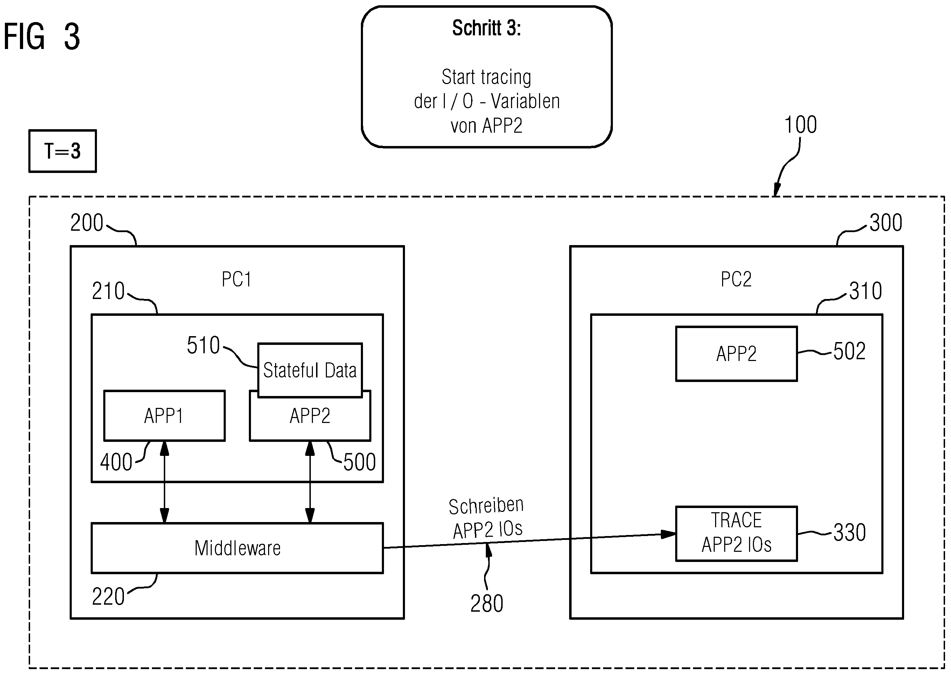

Figur 3 zeigt das Ergebnis eines dritten Arbeitsschritts zu einem Zeitpunkt T = 3, wobei in diesem dritten Arbeitsschritt eine fortlaufende Speicherung von Ein- und Ausgabedaten der ersten Instanz der zweiten Software-Applikation 500 in einer Tracing-Datenbank 330 gestartet wird. Die Tracing-Datenbank 330 ist dabei in der Speichereinrichtung 310 des zweiten PC 300 gespeichert.

Die Speicherung und Übertragung der ein- und Ausgabedaten der ersten Instanz der zweiten Software-Applikation 500 zur Tracing-Datenbank 330 ist in Figur drei durch einen Pfeil 280 symbolisiert.

Ab diesem Startzeitpunkt T = 3 findet diese Speicherung der jeweils aktuellen Ein- und Ausgabedaten in der Tracing-Datenbank 330 fortlaufend auch zu den späteren Zeitpunkten statt soweit dies in den entsprechenden Figuren und/oder der entsprechenden Beschreibung vermerkt ist.

Im Rahmen dieses gestarteten Tracings der Ein- und Ausgabedaten der ersten Instanz der zweiten Software-Applikation 500 werden in der Tracing-Datenbank 330 jeweils zu den jeweiligen Ein- und Ausgabedaten die Zeitpunkte mitgespeichert, zu welchen die jeweiligen Ein- und Ausgabedaten im ersten PC 200 vorlagen. Auf diese Weise ist zu allen in der Tracing-Datenbank 330 gespeicherten Ein- und Ausgabedaten ersichtlich, zu welchem Zeitpunkt die jeweiligen Daten im ersten PC 200 vorlagen.

Sowohl der erste PC 200 als auch der zweite PC 300 sind zu einer zyklischen Programmausführung der in ihnen ablaufenden Software-Applikationen 400, 500, 502 ausgebildet und eingerichtet. Dabei erfolgt die zyklische Programmausführung jeweils mit einer definierten oder definierbaren Zykluszeit. Das Speichern der jeweils aktuellen Ein- und Ausgabedaten der ersten Instanz der zweiten Software-Applikation 500 erfolgt dabei jeweils zwischen zwei Programmzyklen der Ausführung der ersten Instanz der zweiten Software-Applikation 500 im ersten PC 200.

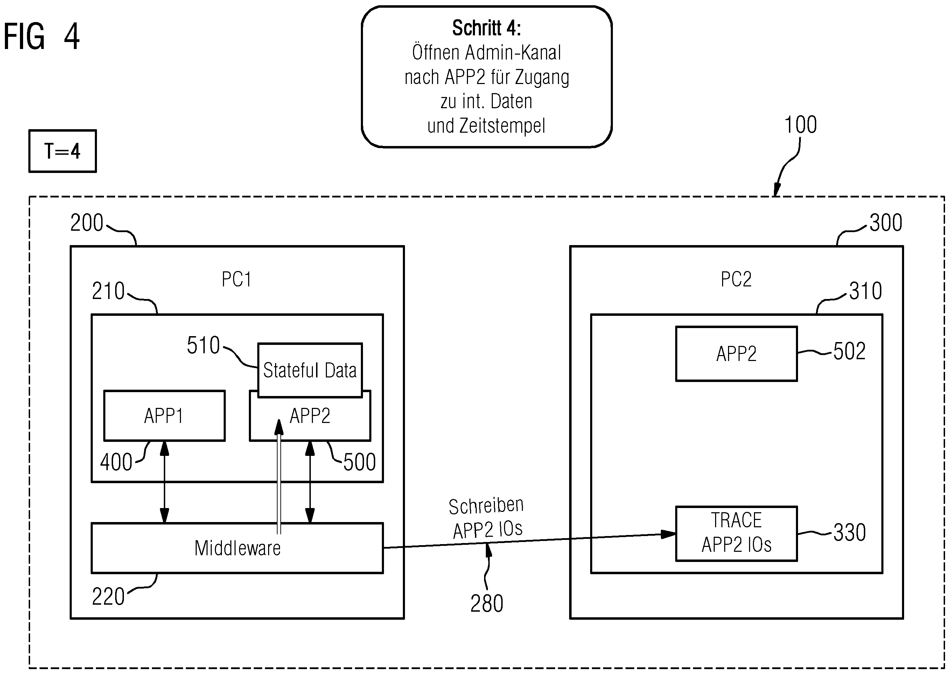

Figur 4 stellt das Ergebnis eines vierten Arbeitsschritts zu einem Zeitpunkt T = 4 dar, nachdem ein Steuer-Kanal von der Middleware 220 zur ersten Instanz der zweiten Software-Applikation 500 geöffnet wurde. Dieses Öffnen des Steuer-Kanals ist in Figur 4 durch einen Doppelpfeil von der Middleware 220 zur ersten Instanz der zweiten Software-Applikation 500 symbolisiert.

Über diesen Steuer-Kanal ist es nun der Middleware 220 möglich, auf die internen Daten und Zeitstempel der ersten Instanz der zweiten Software-Applikation 500 zuzugreifen, insbesondere auch auf Zustandsdaten 510 der ersten Instanz der zweiten Software-Applikation 500.

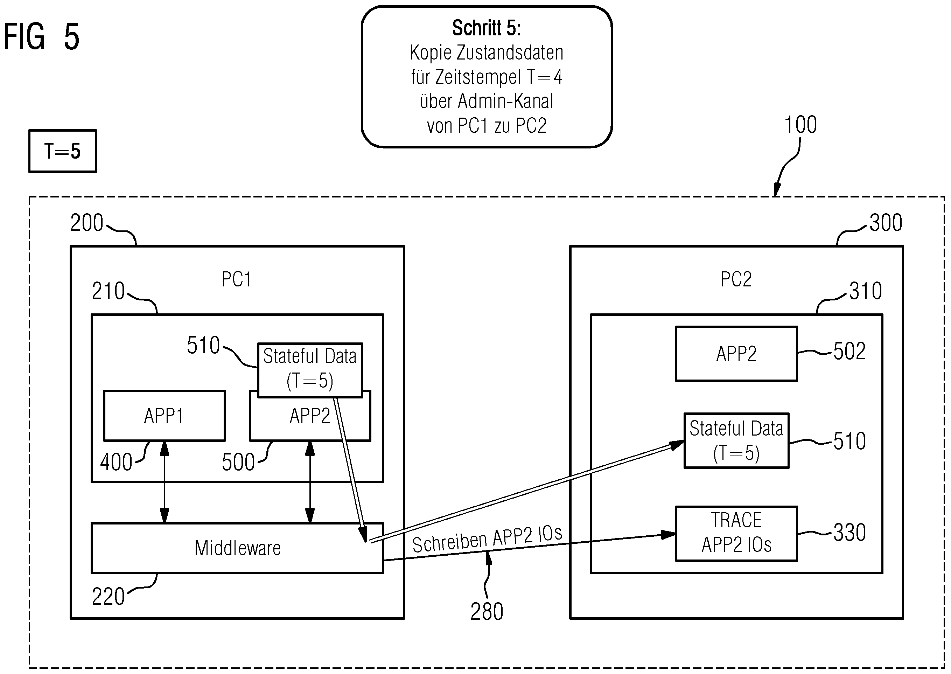

Figur 5 zeigt nun den Verlauf eines 5. Arbeitsschritts zum Zeitpunkt T = 5, bei welchem die zu diesem Zeitpunkt T = 5 gerade aktuellen Zustandsdaten 510 der ersten Instanz der zweiten Software-Applikation 500 zuerst über den geöffneten Steuer-Kanal von der ersten Instanz der zweiten Software-Applikation 500 zur Middleware 220 übertragen werden. Dann werden diese Zustandsdaten 510 über einen dafür geöffneten Kommunikationskanal von der Middleware 220 in den Speicherbereich 310 des zweiten PC 300 übertragen. Diese Übertragungsvorgänge sind in Figur 5 jeweils durch Doppelpfeile von den Zustandsdaten 510 der ersten Instanz der zweiten Software-Applikation 500 zur Middleware 220 und weiter von der Middleware 220 zur Kopie dieser Zustandsdaten 510 im Speicherbereich 310 des zweiten PC 300 symbolisiert.

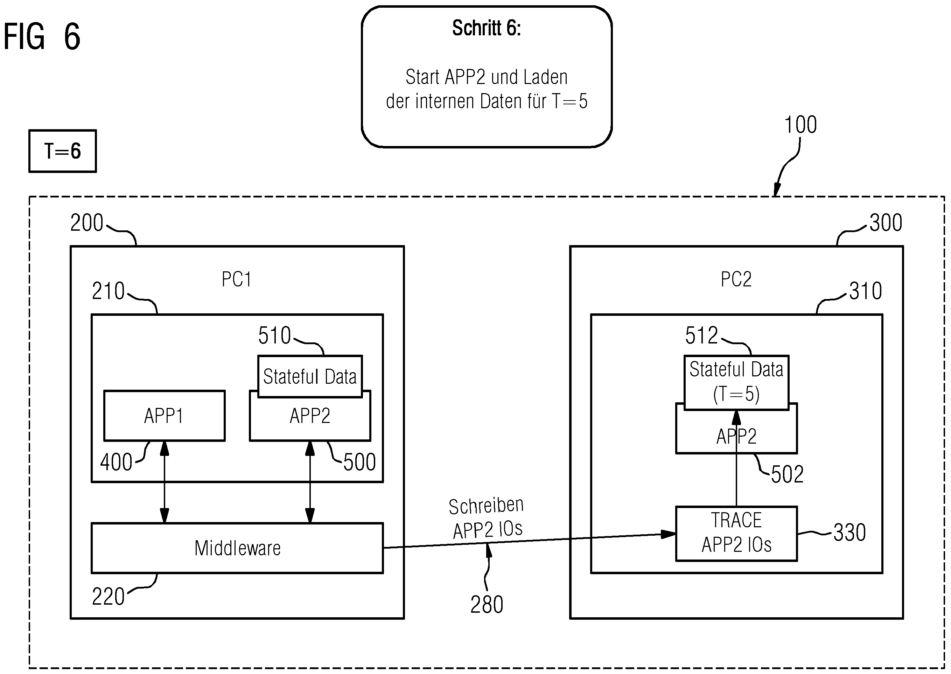

Figur 6 zeigt das Ergebnis eines sechsten Arbeitsschritts zum Zeitpunkt T = 6, bei welchem die im 5. Arbeitsschritt im zweiten PC gespeicherten Zustandsdaten 510 jetzt als zur zweiten Instanz der zweiten Software-Applikation 502 zugehörige Zustandsdaten 512 verwendet werden und dafür in den Zustandsdatenbereich 512 der zweiten Instanz der zweiten Software-Applikation 502 geladen werden.

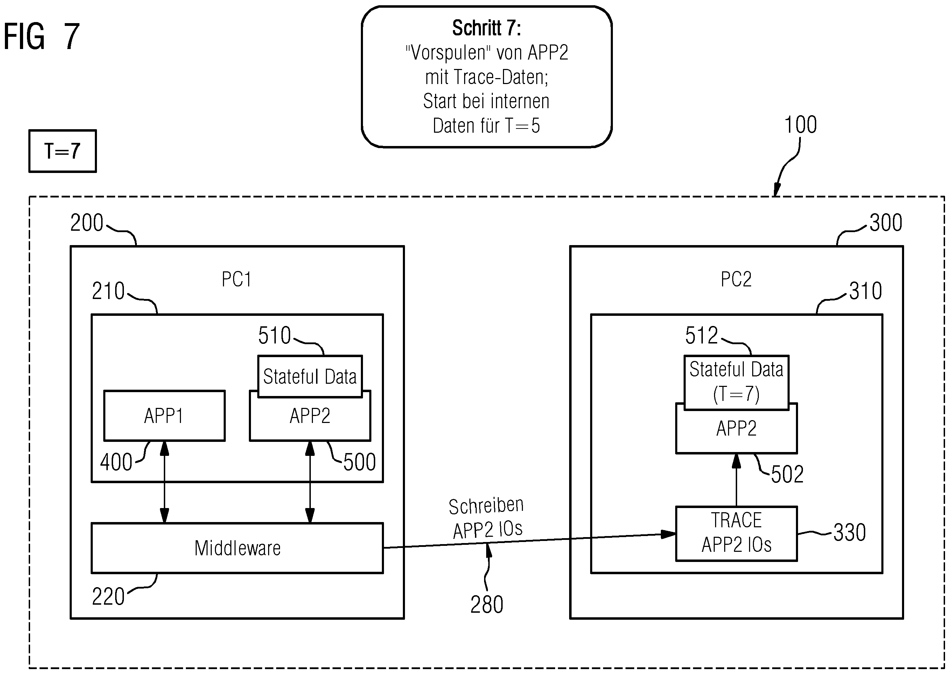

Figur 7 zeigt das Ergebnis eines siebten Arbeitsschritts zu einem Zeitpunkt T = 7. Zu Beginn dieses siebten Arbeitsschritts wird die zweite Instanz der zweiten Software-Applikation 502 im zweiten PC 300 mit den Zustandsdaten, die zum Zeitpunkt T = 5 in der ersten Instanz der zweiten Software-Applikation 500 im ersten PC 200 vorlagen, gestartet. Neben diesen Zustandsdaten 512 werden auch die dem Zeitpunkt T = 5 entsprechenden Ein- und Ausgabedaten aus der Tracing-Datenbank 330 ausgewählt und der zweiten Instanz der zweiten Software-Applikation 502 im zweiten PC 300 zugeführt. Dies ist in Figur 7 durch einen Pfeil von der Tracing-Datenbank 330 zur zweiten Instanz der zweiten Software-Applikation 502 symbolisiert.

Nachfolgend erfolgt in diesem siebten Arbeitsschritt ein beschleunigter Ablauf der zweiten Instanz der zweiten Software-Applikation 502 mit einer reduzierten Zykluszeit. Dabei werden zu jedem Zeitpunkt dann die Zustandsdaten 512 gemäß dem üblichen Programmablauf nachgezogen und die diesem Zeitpunkt zugehörigen Ein- und Ausgabedaten der Tracing-Datenbank 330 entnommen und der zweiten Instanz der zweiten Software-Applikation 502 zugeführt. Da diese Ein- und Ausgabedaten exakt den Daten entsprechen, die auch im ersten PC 200 zu den jeweiligen Zeitpunkten vorlagen, läuft die zweite Instanz der zweiten Software-Applikation 502 im zweiten PC 300 auf diese Weise völlig identisch ab, wie es die erste Instanz der zweiten Software-Applikation 500 im ersten PC 200 getan hatte.

Dieser Ablauf kann als ein "vorspulen" der zweiten Instanz der zweiten Software-Applikation 502 im zweiten PC 300 verstanden werden. Dieses Vorspulen wird nun so lange vorgenommen, bis zum Zeitpunkt T = 7 die erste Instanz der zweiten Software-Applikation 500 im ersten PC 200 und die zweite Instanz der zweiten Software-Applikation 502 im zweiten PC 300 synchron laufen. Dieser Zustand ist in Figur 7 dargestellt.

Ab diesem Zeitpunkt laufen die erste Instanz der zweiten Software-Applikation 500 und die zweite Instanz der zweiten Software-Applikation 502 synchron.

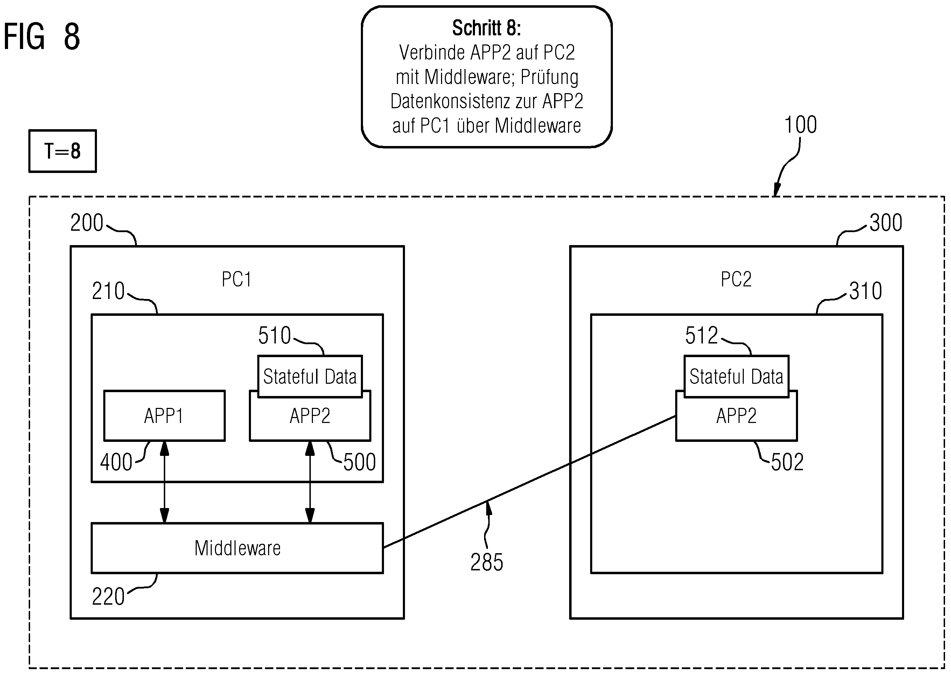

Figur 8 zeigt das Ergebnis eines achten Arbeitsschritts zu einem Zeitpunkt T = 8, bei welchem eine Kommunikationsverbindung 285 der zweiten Instanz der zweiten Software-Applikation 502 im zweiten PC 300 mit der Middleware 220 im ersten PC 200 aufgebaut wird und dann darüber nachfolgend geprüft wird, ob die im Zusammenhang mit der zweiten Instanz der zweiten Software-Applikation 502 im zweiten PC 300 gespeicherten Daten konsistent zu denen sind, welche im Zusammenhang mit der ersten Instanz der zweiten Software-Applikation 500 im ersten PC 200 gespeichert sind.

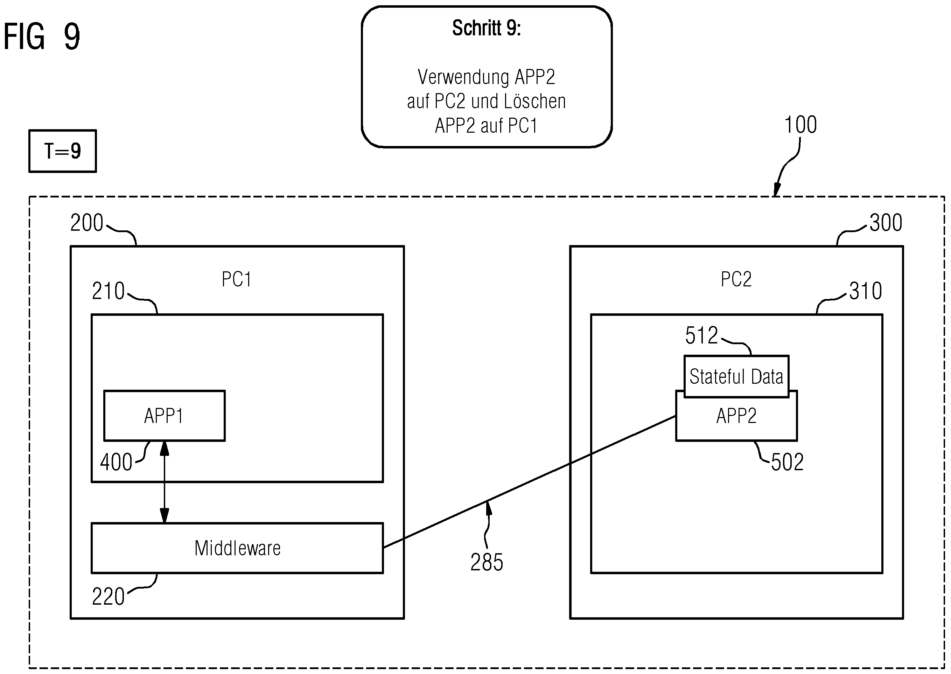

Figur 9 stellt den Zustand nach einem neunten Arbeitsschritt zu einem Zeitpunkt T = 9 dar. In diesem neunten Arbeitsschritt wird die Kommunikation mit der ersten Software-Applikation 400 von der ersten Instanz der zweiten Software-Applikationen 500 auf die im zweiten PC 300 befindliche zweite Instanz der zweiten Software-Applikation 502 umgestellt. Diese Umstellung erfolgt allerdings nur, wenn die im achten Arbeitsschritt vorgenommene Konsistenzprüfung erfolgreich war.

Ab diesem Zeitpunkt T = 9 übernimmt die zweite Instanz der zweiten Software-Applikation 502 im zweiten PC die Kommunikation mit der ersten Software-Applikation 400 über die Kommunikationsverbindung 285 zwischen dem ersten 200 und zweiten PC 300 sowie die Middleware 220.

Nach Aufnahme dieser Kommunikation kann die erste Instanz der zweiten Software-Applikation 500 im ersten PC 200 gelöscht werden.

Bis auf den im neunten Arbeitsschritt in Figur 9 dargestellten Umschaltvorgang der Kommunikation von der ersten Instanz der zweiten Software-Applikation 500 auf die zweite Instanz der zweiten Software-Applikation 502 fand zu jeder Zeit eine Kommunikation der ersten Software-Applikation 400 mit einer der beiden Instanzen der zweiten Software-Applikation 500, 502 statt. Bei genügend kurzer Umschaltzeit ist damit eine quasi kontinuierliche Kommunikation der zweiten Software-Applikation 500, 502 mit der ersten Software-Applikation 400 gewährleistet. Daher kann auf diese Weise eine unterbrechungsfreie Verschiebung der zweiten Software-Applikation 500, 502 vom ersten PC 200 auf den zweiten PC 300 vorgenommen werden.

Die ansonsten eher zeitaufwendigeren Schritte der Übertragung der Zustandsinformationen 510 und Implementieren dieser Zustandsinformationen 512 in der neu installierten zweiten Instanz der zweiten Software-Applikation 502 werden durch Verwendung der Tracing-Datenbank 330 und den Vorspul-Schritt für die zweite Instanz der zweiten Software-Applikation 502 im Hintergrund bereits vor dem Umschalten ausgeführt und verlängern so die Umschaltzeit nicht.

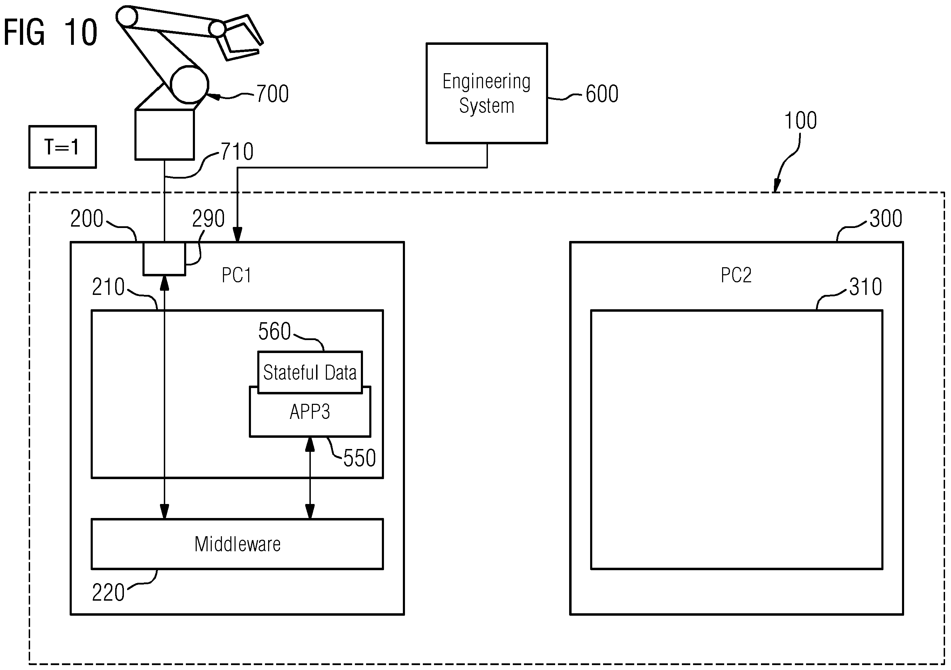

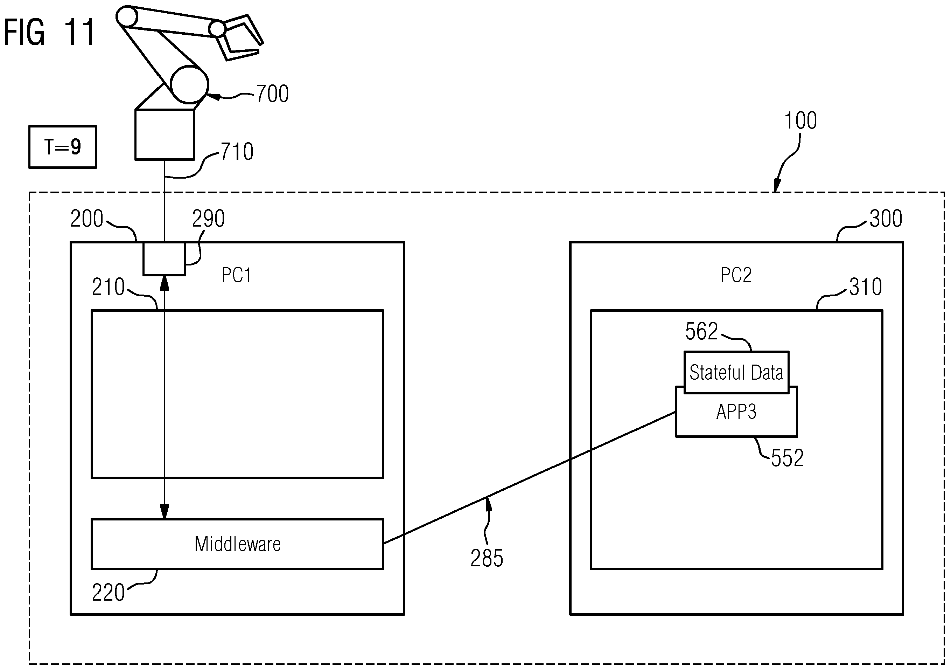

Die Figuren 10 und 11 stellen ein weiteres Beispiel für eine gemäß der Arbeitsschritte 1-9 in den Figuren 1-9 erfolgte Verschiebung einer dritten Software-Applikation 550 vom ersten PC 200 zum zweiten PC 300 dar.

Dabei findet die Kommunikation einer ersten Instanz der dritten Software-Applikation 550 in dem in Figur 10 dargestellten Beispiel über die Middleware 220, ein Feldbus-Interface 290 des ersten PC 200 und eine Feldbus-Leitung 710 mit einem Roboter 700 statt. Hier steuert also die erste Instanz der dritten Software-Applikation 550 über die beschriebene Kommunikationsverbindung den Roboter 700. Bezüglich der ersten Instanz der dritten Software-Applikation 550 sind wiederum Zustandsdaten 560 im Speicherbereich 210 des ersten PC 200 gespeichert.

Nachfolgend dem in Figur 10 dargestellten Zustand finden nun die im Zusammenhang mit den Figuren 1-9 dargestellten Arbeitsschritte 1-9 entsprechend auch hier statt, um die Steuerung des Roboters 700 von der ersten Instanz der dritten Software-Applikation 550 im ersten PC 200 auf eine zweite Instanz der dritten Software-Applikation 552 im zweiten PC 300 zu übertragen.

Figur 10 stellt nun das Ergebnis des neunten Arbeitsschritts gemäß der vorstehenden Beschreibung dar, in welchem die zweite Instanz der dritten Software-Applikation 552 im zweiten PC 300 die Steuerung des Roboters 700 übernommen hat, ohne dass dabei kritische oder erhebliche Unterbrechungszeiten beim Umschalten der Steuerung des Roboters 700 von der ersten Instanz der dritten Software-Applikation 550 auf die zweite Instanz der dritten Software-Applikation 552 aufgetreten waren. Die zweite Instanz der dritten Software-Applikation läuft dann wiederum unter Verwendung mit gemäß dem vorstehend erläuterten Verfahren erzeugten Zustandsdaten 562.

## Patentansprüche

1. Verfahren zum Übertragen einer Software-Applikation (500, 550) von einer ersten (200) zu einer zweiten Datenverarbeitungseinrichtung (300), umfassend die nachfolgenden Schritte:
a.) Ablauf einer in der ersten Datenverarbeitungseinrichtung (200) implementierten ersten Instanz der Software-Applikation (500, 550), wobei im Rahmen des Ablaufs der ersten Instanz der Software-Applikation (500, 550) innerhalb der ersten Datenverarbeitungseinrichtung (200)
- eine Datenkommunikation der ersten Instanz der Software-Applikation (500, 550) mit einer weiteren Software-Applikation (400) und/oder einer Vorrichtung (700) erfolgt, und
- Zustandsdaten (510, 560) bezüglich eines internen Zustands der ersten Datenverarbeitungseinrichtung (200) und/oder bezüglich eines internen Ablaufs der ersten Instanz der Software-Applikation (500, 550) in einer ersten Speichereinrichtung (210) gespeichert werden;
b.) Übertragen von zu einem ersten Zeitpunkt in der ersten Datenverarbeitungseinrichtung (200) vorliegenden Start-Zustandsdaten (510, 560) zu einer mit der zweiten Datenverarbeitungseinrichtung (300) kommunikativ gekoppelten zweiten Speichereinrichtung (310);
c.) Starten einer in der zweiten Datenverarbeitungseinrichtung (300) implementierten zweiten Instanz der Software-Applikation (502, 552) zu einem zweiten Zeitpunkt unter Verwendung der Start-Zustandsdaten (510, 560),
wobei die Ausführung der zweiten Instanz der Software-Applikation (502, 552) in der zweiten Datenverarbeitungseinrichtung (300) dann derart erfolgt, dass zu einem dem zweiten Zeitpunkt nachfolgenden dritten Zeitpunkt die erste Instanz der Software-Applikation (500, 550) in der ersten Datenverarbeitungseinrichtung (200) und die zweite Instanz der Software-Applikation (502, 552) in der zweiten Datenverarbeitungseinrichtung (300) synchron ablaufen;
d.) Übergabe Datenkommunikation mit der weiteren Software-Applikation (400) oder Vorrichtung (700) von der in der ersten Datenverarbeitungseinrichtung (200) implementierten ersten Instanz der Software-Applikation (500, 550) an die in der zweiten Datenverarbeitungseinrichtung (300) implementierten zweite Instanz der Software-Applikation (502, 552).

2. Verfahren gemäß Anspruch 1,
**dadurch gekennzeichnet,**
- **dass** im Rahmen von Verfahrensschritt a.) bei der Datenkommunikation Eingabedaten von der weiteren Software-Applikation (400) und/oder Vorrichtung (700), und/oder Ausgabedaten für die weitere Software-Applikation (400) und/oder Vorrichtung (700) gespeichert werden,
- **dass** in einem weiteren, dem Verfahrensschritt b.) vorausgehenden Verfahrensschritt a1.) ein Tracing-Ablauf zur Speicherung von jeweils aktuellen Eingabe- und/oder Ausgabedaten in einer I/O-Tracing-Datenbank (330) gestartet wird, und
- **dass** im Rahmen des Verfahrensschritts c.) das Starten der zweiten Instanz der Software-Applikation (502, 552) weiterhin unter Verwendung von in der I/O-Tracing-Datenbank (330) bezüglich des ersten Zeitpunkts gespeicherten Eingabe- und/oder Ausgabedaten erfolgt.

3. Verfahren nach Anspruch 2,
**dadurch gekennzeichnet,**
**dass** den in der I/O-Tracing-Datenbank (330) gespeicherten Eingabe- und/oder Ausgabedaten jeweils mindestens ein Zeitwert zugeordnet ist.

4. Verfahren nach einem der vorstehenden Ansprüche,
**dadurch gekennzeichnet,**
**dass** das Verfahren derart ausgestaltet und eingerichtet ist, dass die Datenkommunikation mit der weiteren Software-Applikation (400) und/oder der Vorrichtung (700) unterbrechungsfrei abläuft.

5. Verfahren nach einem der vorstehenden Ansprüche,
**dadurch gekennzeichnet,**
**dass** die erste Instanz der Software-Applikation (500, 550) in der ersten Datenverarbeitungseinrichtung (200) und die zweite Instanz der Software-Applikation (502, 552) in der zweiten Datenverarbeitungseinrichtung (300) jeweils zyklisch ausgeführt werden.

6. Verfahren nach einem der vorstehenden Ansprüche,
**dadurch gekennzeichnet,**
**dass** die erste (200) und zweite Datenverarbeitungseinrichtung (300) jeweils ein Echtzeit-Betriebssystem umfassen, wobei die Ausführung der ersten Instanz der Software-Applikation (500, 550) in der ersten Datenverarbeitungseinrichtung (200) und die Ausführung der zweiten Instanz der Software-Applikation (502, 552) in der zweiten Datenverarbeitungseinrichtung (300) jeweils im Rahmen des jeweiligen Echtzeit-Betriebssystems der jeweiligen Datenverarbeitungseinrichtung (200, 300) erfolgt.

7. Verfahren nach einem der vorstehenden Ansprüche,
**dadurch gekennzeichnet,**
**dass** die erste (500, 550) und zweite Instanz der Software-Applikation (502, 552) jeweils zur Echtzeit-Datenkommunikation mit der weiteren Software-Applikation (400) und/oder der Vorrichtung (700) ausgebildet und eingerichtet sind.

8. Verfahren gemäß einem der vorstehend genannten Ansprüche, **dadurch gekennzeichnet,**
**dass** die Datenkommunikation unter Verwendung eines von den beteiligten Kommunikationspartnern gemeinsam genutzten Speicherbereichs erfolgt.

9. Verfahren nach einem der vorstehenden Ansprüche,
**dadurch gekennzeichnet,**
**dass** im Rahmen eines Einrichtens der ersten Instanz der Software-Applikation (500, 550) in der ersten Datenverarbeitungseinrichtung (200) eine Kennzeichnung der Zustandsdaten (510, 560) erfolgt.

10. Verfahren nach einem der vorhergehenden Ansprüche, **dadurch gekennzeichnet,**
**dass** die erste (200) und zweite Datenverarbeitungseinrichtung (300) jeweils als eine Steuereinrichtung zur Steuerung einer Vorrichtung oder Anlage ausgebildet und eingerichtet ist.

11. Datenverarbeitungssystem (100) umfassend eine erste (200) und zweite Datenverarbeitungseinrichtung (300) gemäß einem der vorstehenden Ansprüche,
wobei das Datenverarbeitungssystem (100) zum Übertragen einer Software-Applikation (500, 550) von der ersten (200) zur zweiten Datenverarbeitungseinrichtung (300) vermittels eines Verfahrens gemäß einem der vorstehenden Ansprüche ausgebildet und eingerichtet ist.
